# EUROPÄISCHE PATENTANMELDUNG

(11) **EP 0 835 854 A1**
(43) Veröffentlichungstag der Anmeldung: **15.04.1998**
(21) Anmeldenummer: 96116223.7
(22) Anmeldetag: 10.10.1996
(51) Int. Cl.: C05D 9/00, C05G 3/00

(54) **Anorganisches Düngemittel**

(71) Anmelder: Fischer GmbH & Co. KG, 56204 Hillscheid (DE)
(72) Erfinder: Hönniger, Peter, 34637 Schrecksbach (DE)
(74) Vertreter: Stenger, Watzke & Ring Patentanwälte

(57) **Zusammenfassung**

In einem anorganischen Dünger mit in anionischer und kationischer Form vorliegenden Düngesalzen, wie die des Stickstoffes (N), Kaliums (K), Phosphors (P), Kalziums (Ca) und Magnesiums (Mg), wird zur Verbesserung derart, daß die aus den Nährstoffen gewonnene Energie neben dem Streckenwachstum zur Verstärkung der Stabilität der Zellen ausgenutzt wird, so daß je nach Konzentration der Anwendung ein Staucheeffekt auf natürlichem Wege und ohne chemische Spritzmittel entsteht, wobei die Pflanzenzellen gegenüber äußeren Einflüssen härter gemacht werden und die innere Qualität der Pflanzen erhöht wird, vorgeschlagen, daß den Düngesalzen Silikate in pflanzenverfügbarer Form, vorzugsweise in wasserlöslicher Form, zugesetzt sind.

## Beschreibung

Die Erfindung betrifft ein anorganisches Düngemittel mit in anionischer und kationischer Form vorliegenden Düngesalzen, wie die des Stickstoffes (N), Kaliums (K), Phosphors (P), Kalziums (Ca) und Magnesiums (Mg).

Anorganische Düngemittel sind als natürliche Mineraldünger bekannt, die natürliche Salze wie Chilesalpeter, Rohphosphate und Gesteinsmehle enthalten, die die Nährstoffe nicht in wasserlöslicher Form aufweisen, so daß sie erst im Boden von Mikroorganismen aufgeschlossen werden müssen und daher als indirekter Dünger wirken. Um eine direkte Aufnahme der Düngemittel in die Pflanzen zu erzielen, wurden synthetische, industriell hergestellte wasserlösliche Mineralsalze als Kunstdünger entwickelt und heute vorherrschend angewandt. Dabei gelangen die Mineralsalze über die Wasseraufnahme direkt in die Pflanze und können auf den Nährstoffbedarf von Boden und Pflanze abgestimmt werden. Die vorliegende Erfindung geht von derartigen bekannten anorganischen Düngemitteln aus, wie sie als Mischdünger gebräuchlich sind. Nachteilig ist dabei, daß mit anorganischen Düngemitteln eine ausreichende Stärkung des Gewebes der Pflanzen oft nur mit erhöhten Salzkonzentrationen erzielbar ist, so daß durch übermäßiges Wachstum die Gefahr entsteht, daß die Stabilität der Zellen sich verringert, indem die aus Nährstoffen gewonnene Energie vor allem zum Streckenwachstum der Pflanzen benutzt wird. Diesem Nachteil wird derzeit mit dem Einsatz von Hemmstoffen und Wachstumsregulatoren begegnet, der nachteiligerweise aufwendig, umweltbelastend und teuer ist.

Der Erfindung liegt die **Aufgabe** zugrunde, den bekannten, eingangs beschriebenen anorganischen Dünger derart zu verbessern, daß die aus den Nährstoffen gewonnene Energie neben dem Streckenwachstum zur Verstärkung der Stabilität der Zellen ausgenutzt wird, so daß je nach Konzentration der Anwendung ein Staucheeffekt auf natürlichem Wege und ohne chemische Spritzmittel entsteht, wobei die Pflanzenzellen gegenüber äußeren Einflüssen härter gemacht werden und die innere Qualität der Pflanzen erhöht wird.

Die Aufgabe ist erfindungsgemäß dadurch gelöst, daß den Düngesalzen Silikate in pflanzenverfügbarer Form, vorzugsweise in wasserlöslicher Form, zugesetzt sind. Silikate sind als Pflanzenhilfsmitteln an sich aus einem Schachtelhalm-Extrakt bekannt, bei dem der wertbestimmende Inhaltsstoff die Kieselsäure (Silikat) ist, welche das Gewebe stärkt. Nachteilig ist beim Schachtelhalm-Extrakt, daß dieser zwar die Pflanze stärkt, aber nicht ausreichend düngt, so daß eine vollständige Ernährung mit seiner Anwendung nicht gesichert ist. Darüber hinaus ist die Herstellung außerordentlich kompliziert, aufwendig und teuer, da zunächst die Schachtelhalme geerntet werden müssen, zu zerkleinern sind und sodann zur Herstellung eines Extraktes als Brühe anzusetzen sind. Letztlich entsteht derart ein biologisches Produkt mit sämtlichen Variationen und damit in chemisch nicht definierbarer Form, so daß auch die Anwendungsergebnisse nicht eindeutig reproduzierbar sind. Vor allem sind mit dieser Methode nur geringe Silizium-Mengen applizierbar. Es ist überraschend, daß mit der erfindungsgemäßen Kombination eines herkömmlichen anorganischen Düngemittels mit Silikaten in pflanzenverfügbarer, insbesondere wasserlöslicher Form, ein Nährstoffeffekt erzielt wird, mit dem ein hartes Pflanzengewebe mit deutlich verfestigter Blattstruktur und insgesamt stabilerer und haltbarer Pflanze aufgebaut werden kann, die in reicher Blüte sowie satt grüne, gegen Vergilben und Vertrocknen resistente Blätter umgesetzt wird und letztlich zu einer in innerer und äußerer Qualität der Pflanze entscheidender Verbesserung führt. Hierdurch können Pflanzenschutzmittel und Hemmstoffe eingespart werden, weil eine Wachstumssteuerung durch gezielten Einsatz verschiedener Härtefaktoren möglich ist.

Vorzugsweise wird dem anorganischen Mineraldünger als pflanzenverfügbares Silikat Kaum- und/oder Natriumsilikat zugesetzt. Dieses kann insbesondere in flüssiger Form mit Wasser als Lösungsmittel angewandt werden, um eine schnelle und vollständige Aufnahme des Düngers durch die Pflanzen sicherzustellen. Die Lösung ist kristallklar und belastet einerseits die Umwelt durch verminderten Einsatz chemischer Präparate deutlich weniger. Außerdem können mit geringeren Salzmengen stabile Pflanzen kultiviert werden. Dies führt zu weniger Ballaststoffen in Boden und Grundwasser.

Gemäß einer zweckmäßigen Ausgestaltung der Erfindung wird in der Gebrauchslösung ein Silikatgehalt zwischen 0,01 ppm und der maximal in Lösung bringbaren Silikatmenge, vorzugsweise zwischen 0,1 ppm und 20 ppm, eingestellt, wobei je nach Anwendung eine Einstellung des Silikatgehaltes in der Gebrauchslösung stufenlos in einfacher Weise möglich ist. Auch hierdurch wird ein positiver Effekt im Sinne einer Umweltentlastung durch verminderten Düngemitteleinsatz erzielt. Gemäß dem bevorzugten Ausführungsbeispiel weist der erfindungsgemäße anorganische Dünger insgesamt folgende Zusammensetzung auf (die Mengenangaben beziehen sich auf 1000 Liter Wasser):

| Minimum | empfohlene Stammlösung | Maximum | Chemikalie |
|---|---|---|---|
| 0 kg | 20 kg | 2660 kg | Kalksalpeter Ca(NO₃)₂ |
| 0 kg | 50 kg | 320 kg | Kalisalpeter KNO₃ |
| 0 kg | 7 kg | 420 kg | Magnesiumnitrat Mg(NO₃)₂x6H₂O |
| 0 kg | 15 kg | 1080 kg | Harnstoff |
| 0 l | 10 l | 1000 l | Salpetersäure (50%) HNO₃ |
| 0 l | 8 l | 1000 l | Ortho-Phosphorsäure (85%)H₃PO₄ |
| 0 g | 15 g | 3680 kg | Zinkchlorid ZnCl₂ |
| 0 g | 25 g | 560 kg | Natriummolybdat |
| 0 g | 250 g | 50 kg | Borax Na₂B₄O₇x10 H₂O |
| 0 g | 200 g | 762 kg | Mangansulfat MnSO₄ |
| 0 g | 50 g | 203 kg | Kupfersulfat CuSO₄ |
| 0 g | 5 g | 1320 kg | wasserlösliches Cobaltsalz |
| 0 kg | 1 kg | 500 kg | Fe-chelat Flory 7 |
| 1 ml | 2 l (HF-20) | 1000 l | Natriumsilikat |

Ein bevorzugtes Ausführungsbeispiel einer Gebrauchslösung liegt bei einer Mischung von 3 bis 10 Liter Stammlösung je 1000 Liter Wasser.

Weitere Einzelheiten, Merkmale und Vorteile des Gegenstandes der Erfindung ergeben sich aus der nachfolgenden Beschreibung des bevorzugten Ausführungsbeispiels.

### Ausführungsbeispiel:

Auszugehen ist von folgender Stammlösung mit einem Härtefaktor HF-20:

| Menge je 1000 l Wasser | Chemikalie |
|---|---|
| 20 kg | Kalksalpeter Ca(NO₃)₂ |
| 50 kg | Kalisalpeter KNO₃ |
| 7 kg | Magnesiumnitrat Mg(NO₃)₂x6H₂O |
| 15 kg | Harnstoff |
| 10 l | Salpetersäure (50%) HNO₃ |
| 8 l | Ortho-Phosphorsäure (85%)H₃PO₄ |
| 15 g | Zinkchlorid ZnCl₂ |
| 25 g | Natriummolybdat |
| 250 g | Borax Na₂B₄O₇x10 H₂O |
| 200 g | Mangansulfat MnSO₄ |
| 50 g | Kupfersulfat CuSO₄ |
| 5 g | wasserlösliches Cobaltsalz |
| 1 kg | Fe-chelat Flory 7 |
| 2 l (HF-20) | Natriumsilikat |

Zur stufenlosen Einstellung des Härtefaktors wird eine kombinierte Anwendung in einer Mischung mit nachfolgendem Rezept für einen Volldünger mit dem Härtefaktor HF-0 vorgeschlagen. Die Mengenangaben beziehen sich auf 1000 Liter Wasser:

| Menge je 1000 l Wasser | Chemikalie |
|---|---|
| 20 kg | Kalksalpeter Ca(NO₃)₂ |
| 50 kg | Kalisalpeter KNO₃ |
| 7 kg | Magnesiumnitrat Mg(NO₃)₂x6H₂O |
| 15 kg | Harnstoff |
| 10 l | Salpetersäure (50%) HNO₃ |
| 8 l | Ortho-Phosphorsäure (85%)H₃PO₄ |
| 15 g | Zinkchlorid ZnCl₂ |
| 25 g | Natriummolybdat |
| 250 g | Borax Na₂B₄O₇x10 H₂O |
| 200 g | Mangansulfat MnSO₄ |
| 50 g | Kupfersulfat CuSO₄ |
| 5 g | wasserlösliches Cobaltsalz |
| 1 kg | Fe-chelat Flory 7 |
| 0 l (HF-0) | Natriumsilikat |

Hierdurch ist eine Einstellung des Härtefaktors zwischen größer 0 und 20 durch die richtige Kombination der Anteile der beiden Dünger möglich. Hiermit wiederum ist der gewünschte Effekt auf die Kulturen wie folgt erzielbar:
- HF-1: (1 Teil HF 20 und 19 Teile HF 0): Geringer Härtefaktor für Jungpflanzen, geringe Hemmung der apikalen Dominanz. Mit HF-1 können Topfpflanzen auch über längere Zeit ohne starken Staucheeffekt, aber mit Stabilitätseffekt gedüngt werden.
- HF-5: (5 Teile HF 20 und 15 Teile HF 0): Mittelstarker Härtefaktor für schwachwachsende Topfpflanzen zur Erzielung eines kompakten Pflanzenaufbaus mit Stabilitätseffekt.
- HF-10: (10 Teile HF 20 und 10 Teile HF 0): Stärkerer Härtefaktor und deutlicherer Staucheeffekt. Kann über längere Zeit bei starkwachsenden Pflanzen verwendet werden.
- HF-20 (20 Teile HF 20): Starker Staucheeffekt, zum Beispiel für Pelargonien, sofern dieser gewünscht ist. Längerfristige Anwendung für starkwachsende Arten. Für noch unbehandelte, schwächerwachsende Arten entsteht ein Stabilitäts- und Haltbarkeitseffekt bei rechtzeitiger Anwendung vor der Vermarktung.

Je höher der Härtefaktor, desto stabiler wird das Pflanzengewebe und desto größer der mögliche Staucheeffekt.

Vom Anwender ist wie bei einem normalen Volldünger zu entscheiden, mit welcher Konzentration die Kulturen gedüngt werden sollen unter Berücksichtigung des aktuellen Salzgehaltes, der Pflanzengröße und des Nährstoffbedarfs sowie der Häufigkeit der Düngegaben. Zur optimalen Versorgung ist eine regelmäßige Bewässerungsdüngung zu empfehlen, da diese dem kontinuierlichen Bedarf der Pflanzen am nächsten kommt. Empfohlene Konzentration 0,3 % bis 1 %, das heißt 3 Liter bis 10 Liter Stammlösung auf 1000 Liter Wasser.

Mit diesem System werden im Gegensatz zu bisher bekannten Düngersystemen folgende Ergebnisse erzielt.
1. Stabilere und resistentere Pflanzen können mit geringerem Salzniveau erzielt werden.
2. Der Mineraldünger wird so schnell und vollständig von den Pflanzen aufgenommen, daß auf niedrigerem Salzniveau als bisher üblich eine gute Versorgung entsteht.
3. Der schon immer problematische und in der Zukunft noch schwieriger werdende Einsatz von Hemmstoffen und Wachstumsregulatoren kann durch konsequenten und richtigen Einsatz der Erfindung um 80 % bis 100 % gesenkt werden. Es hat sich an Versuchskulturen mit der Erfindung gezeigt, daß Hemmstoffe wie folgt eingespart wurden, zum Beispiel:
   - Euphorbia pulcherrima: 100 %
   - Surfinia: 100 %
   - Pelargonium zonale und peltatum: 80 % bis 100 %
   - Fuchsia hybrida: 100 %
   - Hydrangea: 100 %
   - Bacopa: 100 %
   - Topfchrysanthemen: 80 % bis 100 %
4. Durch den Siliziumeffekt in den Zellen werden die Pflanzen gegenüber äußeren Einflüssen härter gemacht und so die innere Qualität der Pflanzen wesentlich verbessert. Dies gilt für Witterungseinflüsse (Hitze, Kälte und Trockenheit) genau so wie für pilzliche Erkrankungen und kleine tierische Schädlinge. Je höher der mögliche einsetzbare Härtefaktor (Siliziumanteil) des Mineraldüngers gewählt wird, um so besser ist der Schutz vor tierischen Schädlingen wie Rote Spinne, Weiße Fliege, Minierfliegen, Thripsen und so weiter. Dasselbe gilt auch für pilzliche Erreger. Gute Erfolge wurden unter anderem bei Botrytis, Alternaria, Fusarium und Mykozentrospora erzielt.
5. Durch die innere Härtung des Zellgewebes sind positive Auswirkungen auf physiologische Eigenschaften der Pflanzen zu erwarten (zum Beispiel Transportfähigkeit, Haltbarkeit, Bewurzelungszeit).

Zusammenfassend sind bei einem konsequenten Einsatz der Erfindung folgende Vorteile zu erwarten:
- Verbesserung der inneren und äußeren Qualität der pflanzlichen Endprodukte;
- Senkung des Verbrauchs an Pflanzenschutzmitteln und Hemmstoffen - also eine Verbesserung der Umweltqualität, insbesondere in den Gewächshäusern und
- Steigerung des Betriebsergebnisses und der Konkurrenzfähigkeit.

## Patentansprüche

1. Anorganisches Düngemittel mit in anionischer und kationischer Form vorliegenden Düngesalzen, wie die des Stickstoffes (N), Kaliums (K), Phosphors (P), Kalziums (Ca) und Magnesiums (Mg),
**dadurch gekennzeichnet,**
daß den Düngesalzen Silikate in pflanzenverfügbarer Form, vorzugsweise in wasserlöslicher Form, zugesetzt sind.

2. Anorganisches Düngemittel nach Anspruch 1, dadurch gekennzeichnet, daß als pflanzenverfügbares Silikat Kalium- und/oder Natriumsilikat verwendet wird.

3. Anorganisches Düngemittel nach Anspruch 1 oder 2, dadurch gekennzeichnet, daß das Silikat in flüssiger Form mit Wasser als Lösungsmittel angewandt wird.

4. Anorganisches Düngemittel nach einem der Ansprüche 1 bis 3, dadurch gekennzeichnet, daß in der Gebrauchslösung ein Silikatgehalt zwischen 0,01 ppm und der maximal in Lösung bringbaren Silikatmenge, vorzugsweise zwischen 0,1 ppm und 20 ppm, eingestellt ist.

5. Anorganisches Düngemittel nach einem der Ansprüche 1 bis 4, gekennzeichnet durch folgende Zusammensetzung:
| Minimum | empfohlene Stammlösung | Maximum | Chemikalie |
|---|---|---|---|
| 0 kg | 20 kg | 2660 kg | Kalksalpeter Ca(NO₃)₂ |
| 0 kg | 50 kg | 320 kg | Kalisalpeter KNO₃ |
| 0 kg | 7 kg | 420 kg | Magnesiumnitrat Mg(NO₃)₂x6H₂O |
| 0 kg | 15 kg | 1080 kg | Harnstoff |
| 0 l | 10 l | 1000 l | Salpetersäure (50%) HNO₃ |
| 0 l | 8 l | 1000 l | Ortho-Phosphorsäure (85%)H₃PO₄ |
| 0 g | 15 g | 3680 kg | Zinkchlorid ZnCl₂ |
| 0 g | 25 g | 560 kg | Natriummolybdat |
| 0 g | 250 g | 50 kg | Borax Na₂B₄O₇x10 H₂O |
| 0 g | 200 g | 762 kg | Mangansulfat MnSO₄ |
| 0 g | 50 g | 203 kg | Kupfersulfat CuSO₄ |
| 0 g | 5 g | 1320 kg | wasserlösliches Cobaltsalz |
| 0 kg | 1 kg | 500 kg | Fe-chelat Flory 7 |
| 1 ml | 2 l (HF-20) | 1000 l | Natriumsilikat |

6. Anorganisches Düngemittel nach Anspruch 5, dadurch gekennzeichnet, daß in einer Gebrauchslösung eine Mischung von 3 Liter bis 10 Liter empfohlener Stammlösung je 1000 Liter Wasser vorliegt.
